# FASCICULE DE BREVET EUROPEEN

(11) **EP 0 395 521 B1**
(45) Date de publication et mention de la délivrance du brevet: **13.04.1994**
(21) Numéro de dépôt: 90401138.4
(22) Date de dépôt: 26.04.1990
(51) Int. Cl.: F16K 31/68

(54) **Soupape thermostatique et son procédé de fabrication**
Thermostatventil und Herstellungsverfahren dafür
Thermostatic valve and manufacturing process for it

(30) Priorité: 27.04.1989 FR 8905592
(43) Date de publication de la demande: 31.10.1990
(73) Titulaire: VERNET S.A., 91290 Arpajon Cédex (FR)
(72) Inventeur: Chamot, Jean-Pierre, F-91290 Arpajon (FR)
(74) Mandataire: Lemoine, Michel

(56) Documents cités:
- EP-A- 0 074 867
- DE-A- 2 017 759
- DE-B- 1 243 480
- DE-B- 2 827 778
- DE-U- 7 431 218
- FR-A- 2 226 601
- FR-A- 2 279 149
- US-A- 4 428 527
- PATENT ABSTRACTS OF JAPAN vol. 9, no. 92 (M-373)(1815) 20 avril 1985,& JP-A-59 218283 (TOYOTA JIDOSHA) 08 décembre 1984

## Description

L'invention est relative aux soupapes thermostatiques actionnées par un organe thermostatique à cire dilatable et comprenant, sur l'un des côtés d'un siège de clapet annulaire, un étrier sur lequel prend appui l'un des deux éléments constitués respectivement par le boîtier et par la tige mobile de l'organe thermostatique à cire et, sur l'autre côté du siège, une cage servant d'appui à un ressort de compression qui tend à repousser vers le siège un clapet lié à l'autre des susdits éléments, l'étrier, le siège et la cage étant assemblés rigidement en une ossature métallique dont la périphérie du siège constitue une bride de fixation. Une telle soupape est connue par exemple du document DE-U- 74 31218.

Dans les soupapes thermostatiques connues, l'une au moins des pièces de l'ossature peut être constituée soit en une matière moulable telle que matière plastique rigide ou métal ou alliage fondu (voir le FR-A-2.279.149), soit en un métal tel qu'acier ou alliage cuivreux. Dans ce dernier cas, l'assemblage des pièces se fait en général par pénétration des extrémités de l'une au moins des pièces dans des ouvertures ménagées dans une autre pièce et par sertissage des parties dépassantes de ces extrémités (voir par exemple les figures 1 et 2 du US-A-4.428.527) mais cet assemblage connu par sertissage est susceptible d'engendrer des fuites importantes à travers les susdites ouvertures. Or, dans les véhicules modernes dont le système de refroidissement du moteur est équipé de telles soupapes thermostatiques et dont le chauffage de l'habitacle du conducteur se fait par emprunt de calories sur ce système de refroidissement, les susdites fuites doivent être fortement limitées, voire supprimées, pour que l'on puisse obtenir un réchauffage rapide de l'habitacle du véhicule par grand froid. A cet effet, on exécute habituellement, après l'opération de sertissage susvisée, une opération de colmatage des fuites par application de colle au niveau des susdites ouvertures mais cette dernière opération est onéreuse, ce qui constitue un handicap pratiquement insurmontable dans la construction automobile.

Pour éviter une telle pénétration et les risques de fuite qui en découlent, on a enfin proposé, dans le DE-U-74 31218, de souder les branches de la cage d'une soupape thermostatique, par un cordon de soudure ou par des points de soudure en bout, à un siège de clapet annulaire, cette cage étant faite d'acier inoxydable alors que l'on ignore en quelles matières sont faits le siège de clapet et l'étrier. L'opération de soudage en bout, non décrite, est particulièrement délicate, surtout lorsque les branches de la cage sont initialement constituées par des pièces indépendantes, et on ignore également comment le ressort du clapet peut être mis en place dans l'ossature.

L'invention a pour buts de rendre les soupapes thermostatiques définies en préambule telles qu'elles soient moins coûteuses et plus faciles à fabriquer et plus fiables au point de vue technique, notamment en restant étanches lorsque le clapet est fermé et en résistant mieux dans le temps aux vibrations et aux attaques chimiques par le liquide de refroidissement et électrochimiques par les couples thermoélectriques éventuellement formés par mise en contact de métaux de natures différentes.

A cet effet, l'invention a pour objet une soupape thermostatique actionnée par un organe thermostatique à cire dilatable et comprenant, sur l'un des côtés d'un siège de clapet annulaire, un étrier sur lequel prend appui l'un des deux éléments constitués respectivement par le boîtier et par la tige mobile de l'organe thermostatique à cire et, sur l'autre côté du siège, une cage servant d'appui à un ressort de compression qui tend à repousser vers le siège un clapet lié à l'autre des susdits éléments, soupape dans laquelle l'étrier, le siège et la cage sont assemblés rigidement en une ossature métallique dont la périphérie du siège constitue une bride de fixation et dans laquelle la cage en acier inoxydable est soudée par points au siège de clapet, caractérisée en ce que non seulement la cage, mais encore l'étrier et le siège sont constitués par des pièces en acier inoxydable qui sont assemblées, en vue de former la susdite ossature, par des points de soudure électrique obtenus par écrasement, contre une partie transversale pleine du siège, de bossages prévus avant ledit écrasement sur des parties de la cage et/ou de l'étrier qui sont parallèles, au moins localement, à cette partie pleine du siège.

Il est clair que l'on atteint bien ainsi les buts définis ci-dessus. En particulier, le remplacement du sertissage (US-A-4.428.527) par la soudure électrique par points élimine les risques de fuite par les ouvertures que nécessitait le sertissage et diminue le prix de revient par suppression de l'opération de colmatage qui faisait suite à l'opération de sertissage. On peut ainsi obtenir une soupape à fuite nulle. De plus, par rapport au DE-U-74 31218, la constitution de la totalité de l'ossature par de l'acier inoxydable supprime les susdits couples thermo-électriques et le remplacement de soudures en bout par des soudures à plat, facilite les opérations de soudage et procure un assemblage fiable qui résiste bien aux vibrations et aux attaques chimiques.

L'invention a également pour objet un procédé de fabrication d'une soupape thermostatique, actionnée par un organe thermostatique à cire dilatable et comprenant, sur l'un des côtés d'un siège de clapet annulaire, un étrier sur lequel prend appui l'un des deux éléments constitués respectivement par le boîtier et par la tige mobile de l'organe thermostatique à cire et, sur l'autre côté du siège, une cage servant d'appui à un ressort de compression qui tend à repousser vers le siège un clapet lié à l'autre des susdits éléments, soupape dans laquelle l'étrier, le siège et la cage sont assemblés rigidement en une ossature métallique dont la périphérie du siège constitue une bride de fixation et dans laquelle la cage en acier inoxydable est soudée par points au siège de clapet, caractérisé en ce que l'on constitue non seulement la cage, mais encore l'étrier et le siège par des pièces en acier inoxydable, la cage et/ou l'étrier étant faits initialement de pièces indépendantes du siège de clapet en ce que l'on établit, à des parties d'extrémité de la ou chaque telle pièce indépendante qui sont disposées parallèlement à une partie transversale pleine du siège de clapet, des bossages en saillie vers cette partie pleine ; en ce qu'on aligne les pièces à assembler en disposant entre elles le ressort de compression ; en ce qu'on place les pièces entre deux jeux d'électrodes de soudage mobiles l'un par rapport à l'autre; et en ce qu'en une seule opération, on comprime le ressort et on effectue la soudure en rapprochant l'un de l'autre les deux jeux d'électrodes avec une force suffisante pour écraser les susdits bossages.

Les jeux d'électrodes servent à positionner les pièces de l'ossature l'une par rapport à l'autre, ce qui dispense de prévoir sur ces pièces des parois de guidage parallèles à l'axe de l'ensemble, comme le propose le FR-A-2.226.601, de telles parois compliquant la formation des pièces et la réalisation des soudures.

L'invention va être décrite plus en détail ci-après à l'aide des modes de réalisation qui sont illustrés par les dessins annexés.

La figure 1 de ces dessins montre, en coupe axiale, une soupape thermostatique établie conformément à un premier mode de réalisation de l'invention.

Les figures 2 et 3 montrent la soupape thermostatique de la figure 1 vue extérieurement et respectivement selon les flèches II et III de la figure 1.

La figure 4 montre, à plus grande échelle, un détail de la figure 1, avant l'opération de soudure par points.

Les figures 5 et 6 montrent, respectivement en coupe selon la ligne V-V de la figure 2 et en vue de face, les détails d'un évent dont est avantageusement munie la même soupape thermostatique.

La figure 7 montre, en coupe axiale, une soupape thermostatique établie conformément à un deuxième mode de réalisation de l'invention et illustre son procédé de fabrication, par des demi-vues partagées par un axe vertical médian.

Les figures 8 et 9 montrent une soupape thermostatique établie conformément à un troisième mode de réalisation de l'invention, respectivement en plan et en élévation avec coupe axiale partielle selon la ligne IX-IX de la figure 8.

La figure 10 montre, en coupe selon la ligne X-X de la figure 7, un détail de la cage avant l'opération de soudure.

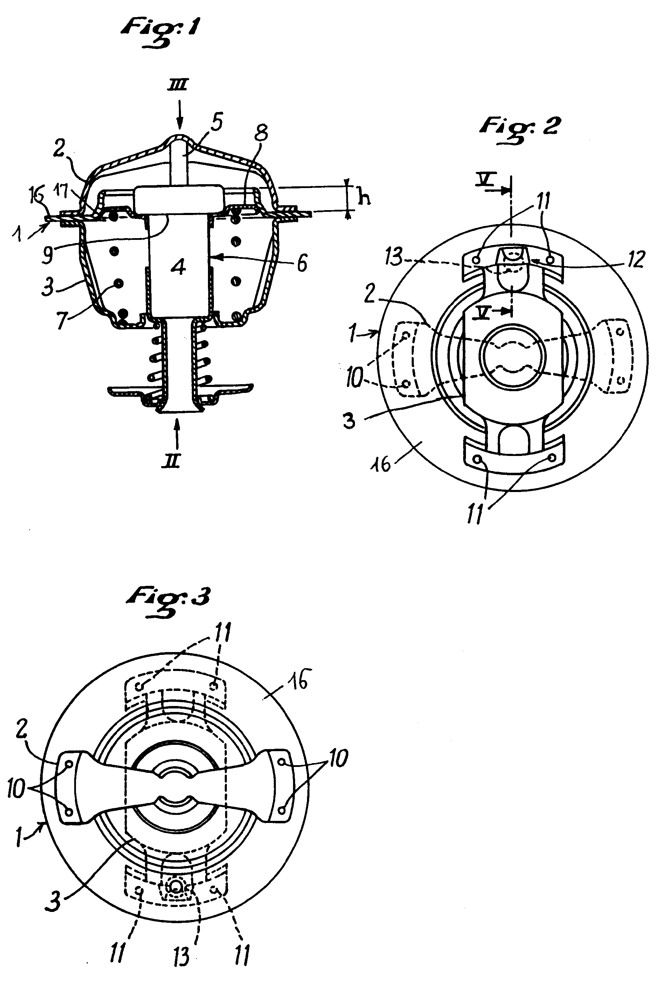

Selon le mode de réalisation des figures 1 à 3, la soupape thermostatique, qui est actionnée par un organe thermostatique 6 à cire dilatable, comprend, sur l'un des côtés d'un siège de clapet annulaire 1 dont la périphérie constitue une bride de fixation, un étrier 2 sur lequel prend appui l'un des deux éléments constitués respectivement par le boîtier 4 et la tige mobile 5 de l'organe thermostatique 6 et, sur l'autre côté du siège 1, une cage 3 servant d'appui à un ressort de compression 7 qui tend à repousser vers le siège 1 un clapet 8 lié à l'autre des susdits éléments 4, 5. Selon ce mode de réalisation, c'est la tige 5 qui prend appui sur l'étrier 2 et le boîtier 4 qui est lié au clapet 8, par l'intermédiaire d'un épaulement 9 de ce boîtier 4. Comme il ressort des figures 1 à 3, l'étrier 2 et la cage 3 sont ajourés pour laisser libre passage à un liquide, tel que le liquide de refroidissement d'un moteur, tandis que le siège-bride 1 comprend une partie transversale pleine 16, de préférence plane ou approximativement plane, et une partie intérieure tronconique 17 formant le siège proprement dit pour le clapet 8 de telle sorte que ce siège-bride 1 soit étanche lorsque le clapet 8 est appliqué contre lui par la force du ressort 7. Le bord extérieur de la partie transversale pleine 16 constitue la susdite bride de fixation.

En cas d'élévation de la température, le seul passage offert au liquide, d'un côté à l'autre du siège-bride 1, est l'ouverture centrale du siège-bride 1 dont le clapet 8 est alors écarté par abaissement (selon la figure 1) du boîtier 4, cet abaissement étant dû, de façon connue, à la dilatation de la cire contenue dans le boîtier 4.

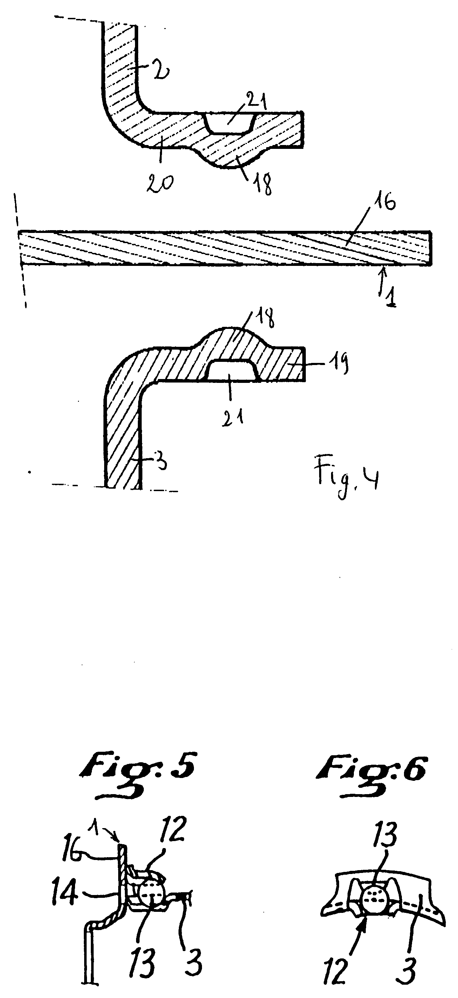

Le mode de réalisation des figures 1 à 3 comprend trois pièces en acier inoxydable qui sont fabriquées séparément et ensuite assemblées rigidement par des points de soudure, à savoir le siège-bride 1, l'étrier 2 et la cage 3. Selon l'invention, le siège-bride 1 est fixé d'une part à l'étrier 2 par des points de soudure électrique 10 et d'autre part à la cage 3 par des points de soudure électrique 11 obtenus par écrasement, contre la partie pleine 16 du siège 1, de bossages 18 prévus avant ledit écrasement sur des parties 19 et/ou 20 de la cage 3 et/ou de l'étrier 2 qui sont parallèles, au moins localement, à cette partie pleine 16 du siège 1. La figure 4 montre, à grande échelle, un détail des trois pièces 1, 2 et 3 avant la soudure électrique par points et l'on y voit en particulier que les bossages 18 font initialement saillie vers la partie pleine 16. Ces bossages 18 sont de préférence réalisés par emboutissage et il leur correspond par conséquent des creux 21 sur les faces opposées des parties 19 et 20.

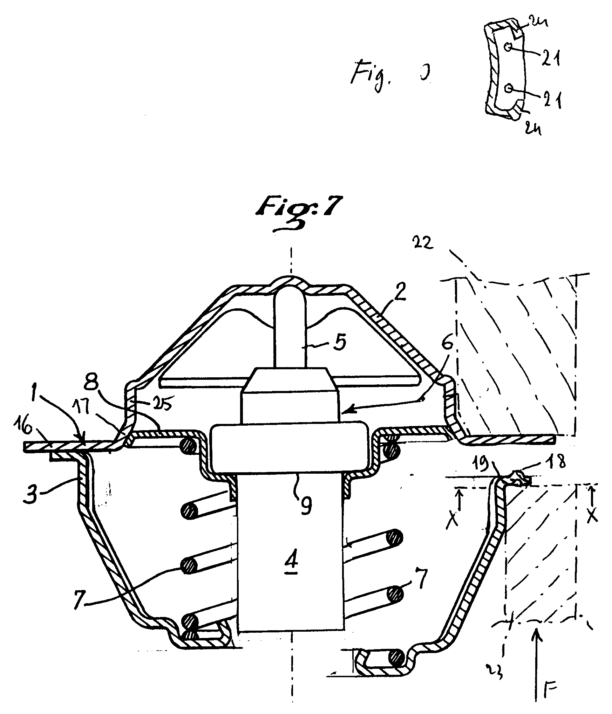

Comme il ressort des figures 2 et 3, les points de soudure 10, au nombre par exemple de deux paires, peuvent être décalés par rapport aux points de soudure 11, par exemple également au nombre de deux paires. Ce décalage est avantageusement de 90° par rapport à l'axe de symétrie de la soupape thermostatique qui coïncide approximativement avec l'axe des flèches II et III de la figure 1. Selon une variante non représentée, les points de soudure 10 et 11 pourraient coïncider, c'est-à-dire être alignés deux à deux parallèlement audit axe, auquel cas il suffirait d'une seule opération de soudure (qui sera détaillée ci-après en regard de la figure 7) pour fixer ensemble les trois pièces 1, 2 et 3.

De préférence, le siège-bride 1 est peu profond, ce qui lui permet d'être fabriqué par un outil à suivre à très grande cadence. Sa hauteur h (figure 1) est environ trois fois plus petite que la hauteur d'un siège de soupape thermostatique de construction classique, de mêmes caractéristiques.

L'étrier 2, constitué par une pièce fabriquée à très grande cadence par pliage-découpage, peut être rigidifié de façon importante pour absorber tous les efforts lorsque le clapet 8 est ouvert.

Comme l'étrier 2, la cage 3 peut comporter deux bras qui offrent entre eux un libre passage au liquide et qui sont soit décalés de 90° par rapport à ceux de l'étrier 2, dans le cas où les points de soudure 10 sont décalés angulairement par rapport aux points de soudure 11, soit alignés avec ceux de l'étrier 2, dans le cas où les points de soudure 10 et 11 sont eux-mêmes alignés deux par deux les uns avec les autres.

Dans les constructions connues, l'évent qui est prévu pour faciliter le remplissage du circuit d'eau sur lequel est placée la soupape thermostatique est généralement constitué par une cage à bille qui est fabriquée séparément et qui nécessite une opération spéciale de sertissage pour emprisonner la bille, ce qui occasionne une augmentation de prix de la soupape thermostatique (voir le US-A-4.428.527).

La réalisation exclusivement en acier inoxydable selon l'invention permet entre autres de conformer localement le bord de la cage 3 de façon à constituer un logement 12 pour une bille d'évent 13 (voir figures 2, 3, 5 et 6), ce logement 12 possédant une ouverture qui est suffisamment large pour permettre l'introduction de la bille 13 mais qui se trouve obturée définitivement par le siège-bride 1 lors de l'exécution des points de soudure 11. Ensuite, la bille 13 reste emprisonnée dans le logement 12 mais peut s'y déplacer librement, en venant obturer ou libérer de façon usuel le un trou d'évent 14 ménagé dans le siège-bride 1. Ceci contribue à diminuer encore le prix de revient de la soupape thermostatique.

Le mode de réalisation de la figure 7 diffère du mode de réalisation précédent par le fait que le siège-bride 1 et l'étrier 2 sont fabriqués par emboutissage en une seule pièce. Ce mode de réalisation ne comprend donc que deux pièces en acier inoxydable 1-2 d'une part et 3 d'autre part que l'on fixe ensemble par des points de soudure électrique analogues à ceux qui sont désignés par 11 aux figures 2 et 3.

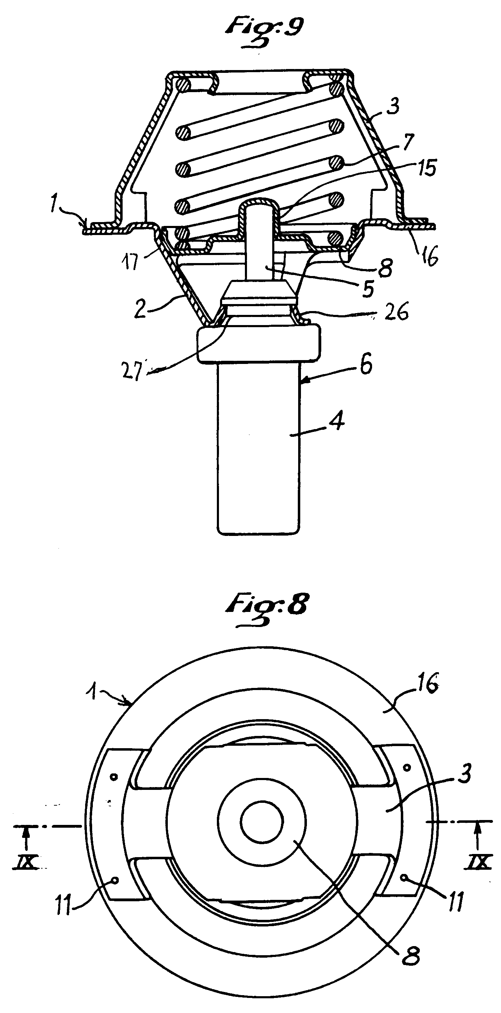

Le mode de réalisation des figures 8 et 9 ne comprend lui aussi que deux pièces en acier inoxydable, à savoir une première pièce formant le siège-bride 1 et l'étrier 2 et une deuxième pièce constituant la cage 3 mais, à la différence des modes de réalisation précédents, c'est le boîtier 4 qui prend appui sur l'étrier 2 et la tige 5 qui est liée au clapet 8. A cet effet, l'étrier 2 comporte une bague 26 qui emprisonne une partie du boîtier 4, munie à cet effet d'une gorge 27, et le clapet 8 comprend un creux central 15 qui reçoit l'extrémité libre de la tige 5. On voit à la figure 8 les points de soudure électrique 11 qui servent à assembler rigidement les deux pièces définies ci-dessus.

Le procédé de fabrication de la soupape thermostatique conforme à l'invention est illustré à titre d'exemple à l'aide du mode de réalisation de la figure 7 dont la partie droite illustre l'une des phases finales de ce procédé et la partie gauche la soupape thermostatique ainsi fabriquée.

Selon ce procédé,
- on constitue la cage 3, l'étrier 2 et le siège 1 par des pièces en acier inoxydable, la cage 3 et/ou l'étrier 2 étant faits initialement de pièces indépendantes du siège 1 (selon le mode de réalisation de la figure 7, seule la cage 3 constitue initialement une pièce indépendante de l'ensemble formé par le siège 1 et l'étrier 2) ;
- on établit, à des parties d'extrémité telles que 19 et 20 de la ou chaque telle pièce indépendante qui sont disposées parallèlement à la partie transversale pleine 16 du siège 1, des bossages 18 en saillie vers cette partie 16 ;
- on aligne, comme représenté à la partie droite de la figure 7, les pièces à assembler en disposant entre elles le ressort de compression 7 ;
- on place les pièces entre deux jeux d'électrodes de soudage 22, 23, mobiles en translation l'un par rapport à l'autre, le jeu d'électrodes 22 étant par exemple fixe et le jeu d'électrodes 23 étant mobile selon la flèche F ; et
- en une seule opération, on comprime le ressort 7 et on effectue la soudure en rapprochant l'un de l'autre les deux jeux d'électrodes 22 et 23 avec une force suffisante pour écraser les bossages 18.

La figure 10 montre comment peut être conformée la partie 19 de la cage 3, avec ses creux 21 correspondant aux bossages 18 et avec des ailes 24 permettant de rigidifier les bras de la cage 3 tout en permettant de centrer ces bras par rapport au jeu d'électrodes 23, l'étrier 2 se centrant lui-même sur le jeu d'électrodes 22 par exemple par appui d'une surface latérale 25 de cet étrier 2 contre les électrodes du jeu 22.

Dans le cas où il est prévu une bille d'évent telle que 13 (figures 2, 3, 5 et 6), ce procédé comporte avantageusement les phases supplémentaires suivantes :
- on ménage sur le bord de la cage 3 un logement 12 pour une bille d'évent 13 et dans le siège 1 un trou d'évent 14 ;
- on place la bille 13 dans le logement 12 ; et
- on effectue la phase finale de rapprochement des jeux d'électrode 22, 23 de façon que le siège 1 maintienne la bille 13 dans son logement 12.

## Revendications

1. Soupape thermostatique actionnée par un organe thermostatique (6) à cire dilatable et comprenant, sur l'un des côtés d'un siège de clapet annulaire (1), un étrier (2) sur lequel prend appui l'un des deux éléments constitués respectivement par le boîtier (4) et par la tige mobile (5) de l'organe thermostatique à cire (6) et, sur l'autre côté du siège (1), une cage (3) servant d'appui à un ressort de compression (7) qui tend à repousser vers le siège (1) un clapet (8) lié à l'autre des susdits éléments (4, 5), soupape dans laquelle l'étrier (2), le siège (1) et la cage (3) sont assemblés rigidement en une ossature métallique dont la périphérie du siège (1) constitue une bride de fixation et dans laquelle la cage (3) en acier inoxydable est soudée par points au siège de clapet (1), caractérisée en ce que non seulement la cage (3), mais encore l'étrier (2) et le siège (1) sont constitués par des pièces en acier inoxydable qui sont assemblées, en vue de former la susdite ossature, par des points de soudure électrique (10, 11) obtenus par écrasement, contre une partie transversale pleine (16) du siège (1), de bossages (18) prévus avant ledit écrasement sur des parties (19) de la cage (3) et/ou (20) de l'étrier (2) qui sont parallèles, au moins localement, à cette partie pleine (16) du siège (1).

2. Soupape thermostatique selon la revendication 1, caractérisée en ce que l'élément prenant appui sur l'étrier (2) est la tige (5) et l'élément auquel est lié le clapet (8) est le boîtier (4).

3. Soupape thermostatique selon l'une des revendications 1 et 2, caractérisée en ce que l'étrier (2), le siège-bride (1) et la cage (3) sont constitués respectivement par trois pièces fabriquées séparément et assemblées deux à deux par les points de soudure électrique (10, 11).

4. Soupape thermostatique selon la revendication 3, caractérisée en ce que les points de soudure (10) reliant le siège-bride (1) à l'étrier (2) sont décalés angulairement par rapport aux points de soudure (11) reliant le siège-bride (1) à la cage (3).

5. Soupape thermostatique selon la revendication 3, caractérisée en ce que les points de soudure (10) reliant le siège-bride (1) à l'étrier (2) coïncident avec les points de soudure (11) reliant le siège-bride (1) à la cage (3).

6. Soupape thermostatique selon l'une quelconque des revendications 3 à 5, caractérisée en ce qu'une bille d'évent (13) est emprisonnée avec jeu entre le siège-bride (1) et la cage (3).

7. Soupape thermostatique selon la revendication 6, caractérisée en ce qu'un logement (12) est ménagé localement sur le bord de la cage (3) pour la bille d'évent (13).

8. Soupape thermostatique selon la revendication 1, caractérisée en ce que l'élément prenant appui sur l'étrier (2) est le boîtier (4) et l'élément auquel est lié le clapet (8) est la tige (5).

9. Soupape thermostatique selon l'une des revendications 2 et 8, caractérisée en ce que le siège-bride (1) et l'étrier (2) sont constitués d'une première pièce et la cage (3) d'une deuxième pièce, ces deux pièces étant fixées l'une à l'autre par des points de soudure (11).

10. Procédé de fabrication d'une soupape thermostatique, actionnée par un organe thermostatique (6) à cire dilatable et comprenant, sur l'un des côtés d'un siège de clapet annulaire (1), un étrier (2) sur lequel prend appui l'un des deux éléments constitués respectivement par le boîtier (4) et par la tige mobile (5) de l'organe thermostatique à cire (6) et, sur l'autre côté du siège (1), une cage (3) servant d'appui à un ressort de compression (7) qui tend à repousser vers le siège (1) un clapet (8) lié à l'autre des susdits éléments (4, 5), soupape dans laquelle l'étrier (2), le siège (1) et la cage (3) sont assemblés rigidement en une ossature métallique dont la périphérie du siège (1) constitue une bride de fixation et dans laquelle la cage (3) en acier inoxydable est soudée par points au siège de clapet (1), caractérisé en ce que l'on constitue non seulement la cage (3), mais encore l'étrier (2) et le siège (1) par des pièces en acier inoxydable, la cage (3) et/ou l'étrier (2) étant faits initialement de pièces indépendantes du siège de clapet (1); en ce que l'on établit, à des parties d'extrémité (19, 20) de la ou chaque telle pièce indépendante qui sont disposées parallèlement à une partie transversale pleine (16) du siège de clapet (1), des bossages (18) en saillie vers cette partie pleine (16) ; en ce qu'on aligne les pièces à assembler en disposant entre elles le ressort de compression (7) ; en ce qu'on place les pièces entre deux jeux d'électrodes de soudage (22, 23) mobiles l'un par rapport à l'autre ; et en ce qu'en une seule opération, on comprime le ressort (7) et on effectue la soudure en rapprochant l'un de l'autre les deux jeux d'électrodes (22, 23) avec une force suffisante pour écraser les susdits bossages (18).

11. Procédé selon la revendication 10 pour fabriquer une soupape thermostatique comprenant une bille d'évent (13), caractérisé en ce qu'il comporte les phases supplémentaires suivantes :
- on ménage sur le bord de la cage (3) un logement (12) pour la bille d'évent (13) et dans le siège (1) un trou d'évent (14) ;
- on place la bille (13) dans le logement (12) ; et
- on effectue la phase finale de rapprochement des jeux d'électrodes (22, 23) de façon que le siège (1) maintienne la bille (13) dans son logement (12).

## Patentansprüche

1. Durch ein thermostatisches Dehnstofforgan (6) betätigtes Thermostatventil, das auf der einen Seite eines Sitzes eines Ringdeckels (1) einen Bügel (2) aufweist, auf dem sich eins der beiden Elemente bestehend aus dem Gehäuse (4) beziehungsweise aus dem beweglichen Kolben (5) des thermostatischen Dehnstofforgans (6) abstützt, und auf der anderen Seite des Sitzes (1) einen Käfig (3), auf dem eine Druckfeder (7) sich abstützt, die einen mit einem anderen der vorgenannten Elemente (4, 5) verbundenen Deckel (8) zum Sitz (1) hin zurückschieben soll, hierbei sind bei dem Ventil der Bügel (2), der Sitz (1) und der Kätig (3) als Metallgerippe steif zusammengesetzt, in dem die Peripherie des Sitzes (1) einen Befestigungsflansch bildet, und bei dem der Käfig (3) aus rostfreiem Stahl durch Punkte am Deckelsitz (1) angeschweißt ist,
**dadurch gekennzeichnet**,
daß nicht nur der Käfig (3) sondern auch der Bügel (2) und der Sitz (1) aus rostfreien Stahlteilen bestehen, die zur Bildung des vorgenannten Gerippes mit Elektroschweißpunkten (10, 11) zusammengefügt sind, die durch Quetschen von Buckeln (18) gegen ein volles, querverlaufendes Teil (16) des Sitzes (1) entstehen, hierbei sind die Buckel (18) vor dem genannten Quetschen an Teilen (19) des Käfigs (3) und/oder (20) des Bügels (2) vorgesehen, die wenigstens an dieser Stelle parallel zu diesem vollen Teil (16) des Sitzes (1) verlaufen.

2. Thermostatventil nach Anspruch 1, dadurch gekennzeichnet, daß das auf dem Bügel (2) abgestützte Element der Kolben (5) ist, und das mit dem Deckel (8) verbundene Element das Gehäuses (4) ist.

3. Thermostatventil nach einem der Ansprüche 1 uns 2, dadurch gekennzeichnet, daß der Bügel (2), der Sitz-Flansch (1) und der Käfig (3) aus drei jeweils getrennt hergestellten Teilen bestehen und paarweise mit Elektroschweißpunkten zusammengefügt sind (10, 11).

4. Thermostatventil nach Anspruch 3, dadurch gekennzeichnet, daß die Schweißpunkte (10), die den Sitz-Flansch (1) mit dem Bügel (2) verbinden, gegenüber den Schweißpunkten (11), die den Sitz-Flansch (1) mit dem Käfig (3) verbinden, im Winkel versetzt sind.

5. Thermostatventil nach Anspruch 3, dadurch gekennzeichnet, daß die Schweißpunkte (10), die den Sitz-Flansch (1) mit dem Bügel (2) verbinden, mit den Schweißpunkten (11) fluchten, die den Sitz-Flansch (1) mit dem Käfig (3) verbinden.

6. Thermostatventil nach einem der Ansprüche 3 bis 5, dadurch gekennzeichnet, daß eine Entlüftungskugel (13) mit Spiel zwischen dem Sitz-Flansch (1) und dem Käfig (3) eingeschlossen sind.

7. Thermostatventil nach Anspruch 6, dadurch gekennzeichnet, daß in der Wandung des Käfigs (3) eine Aufnahme (12) für die Entlüftungskugel (13) vorgesehen ist.

8. Thermostatventil nach Anspruch 1, dadurch gekennzeichnet, daß das auf dem Bügel (2) abgestützte Element das Gehäuse (4) ist und das mit dem Deckel (8) verbundene Element der Kolben (5) ist.

9. Thermostatventil nach einem der Ansprüche 3 bis 5, dadurch gekennzeichnet, daß der Sitz-Flansch (1) und der Bügel (2) aus einem ersten Teil und der Käfig (3) aus einem zweiten Teil bestehen, wobei beide Teile durch Schweißpunkte (11) miteinander befestigt sind.

10. Verfahren zur Herstellung eines durch ein thermostatisches Dehnstofforgan (6) betätigtes Thermostatventil, das auf der einen Seite des Sitzes eines Ringdeckels (1) einen Bügel (2) aufweist, auf dem eins der beiden Elemente bestehend aus dem Gehäuse (4) beziehungsweise aus dem beweglichen Kolben (5) des thermostatischen Dehnstofforgans (6) abgestützt ist, und auf der anderen Seite des Sitzes (1) einen Käfig (3), auf dem eine Druckfeder (7) abgestützt ist, die einen mit einem anderen der vorgenannten Elemente (4, 5) verbundenen Deckel (8) zum Sitz hin (1) zurückschieben soll, hierbei sind bei dem Ventil der Bügel (2), der Sitz (1) und der Käfig (3) als Metallgerippe steif zusammengefügt, wobei die Peripherie des Sitzes (1) einen Befestigungsflansch bildet, und bei dem der Käfig (3) aus rostfreiem Stahl durch Punkte am Deckelsitz (1) angeschweißt ist,
**dadurch gekennzeichnet**, daß
nicht nur der Käfig (3) sondern auch der Bügel (2) und der Sitz (1) aus rostfreien Stahlteilen gebaut werden, wobei der Käfig (3) und/oder der Bügel (2) ursprünglich aus Teilen bestehen, die unabhängig vom Deckelsitz (1) sind; dadurch, daß in Endbereichen (19, 20) des einen oder jedes gleichen unabhängigen Teils, die parallel zu einem querverlaufenden, vollen Teil (16) des Deckelsitzes (1) angeordnet sind, zu diesem vollen Teil (16) hin herausragende Buckel (18) vorgesehen werden; dadurch, daß die zusammenzufügenden Teile zusammengelegt werden und die Druckfeder (7) dazwischen eingesetzt wird; dadurch, daß die Teile zwischen zwei Schweißelektroden (22, 23), die im Verhältnis zueinander beweglich sind, gelegt werden; und dadurch daß in einem einzigen Arbeitsgang die Feder (7) zusammengedrückt wird, und es wird geschweißt, indem die zwei Elektrodensätze (22, 23) mit einer zum Quetschen der obengenannten Buckel (18) ausreichenden Kraft zueinandergeführt werden.

11. Verfahren nach Anspruch 10 zur Herstellung eines Thermostatventils, das eine Entlüftungskugel (13) aufweist, dadurch gekennzeichnet, daß es folgende zusätzliche Verfahrenabschnitte aufweist:
- in der Wandung des Käfigs (3) wird eine Aufnahme (12) für die Entlüftungskugel (13) geschaffen und im Sitz (1) eine Entlüftungsöffnung (14);
- die Kugel (13) wird in die Aufnahme (12) eingesetzt; und
- der letzte Verfahrensabschnitt des Zueinanderführens der Elektrodensätze (22, 23) wird so angeführt, daß der Sitz (1) die Kugel (13) in ihrer Aufnahme (12) hält.

## Claims

1. A thermostatic valve actuated by an expansible wax thermostatic element (6) and comprising on one side of an annular valve seat (1) a bow-shaped member (2) on which bears one of the two elements constituted respectively by the casing (4) and by the movable stem (5) of the thermostatic wax element (6) while on the other side of the seat (1) is a cage (3) serving as an abutment for a compression spring (7) which seeks to push back towards the seat (1) a valve (8) connected to the other of the above-mentioned elements (4, 5), the valve in which the bow-shaped member (2), the seat (1) and the cage (3) are rigidly mounted on a metal frame-work, the periphery of the seat (1) constituting a fixing flange and in which the stainless steel cage (3) is spot welded to the valve seat (1), characterised in that not only the cage (3) but also the bow-shaped member (2) and the seat (1) consist of stainless steel parts which are assembled in order to form the aforesaid framework by electric spot welding (10, 11) achieved by compression setting, against a solid cross-member (16) of the seat (1), of bosses (18) provided prior to said compression setting on parts (19) of the cage (3) and/or (20) of the bow-shaped member (2) which are at least locally parallel with the said solid part (16) of the seat (1).

2. A thermostatic valve according to claim 1, characterised in that the element which bears on the bow-shaped member (2) is the stem (5) and the element to which the valve (8) is connected is the casing (4).

3. A thermostatic valve according to one of claims and 2, characterised in that the bow-shaped member (2), the seat-flange (1) and the cage (3) are constituted respectively by three parts which are separately made and assembled two by two by electric spot welds (10, 11).

4. A thermostatic valve according to claim 3, characterised in that the spot welds (10) connecting the seat-flange (1) to the bow-shaped member (2) are angularly offset in relation to the spot welds (11) connecting the seat-flange (1) to the cage (3).

5. A thermostatic valve according to claim 3, characterised in that the spot welds (10) connecting the seat-flange (1) to the bow-shaped member (2) coincide with the spot welds (11) connecting the seat-flange (1) to the cage (3).

6. A thermostatic valve according to any one of claims 3 to 5, characteristic in that a breather valve ball (13) is, with clearance, captive between the seat-flange (1) and the cage (3).

7. A thermostatic valve according to claim 6, characterised in that a seating (12) is provided locally on the edge of the cage (3) for the breather valve ball (13).

8. A thermostatic valve according to claim 1, characterised in that the element which bears on the bow-shaped member (2) is the casing (4) and the element to which the valve (8) is connected is the stem (5).

9. A thermostatic valve according to one of claims 2 and 8, characterised in that the seat-flange (1) and the bow-shaped member (2) are constituted by a first part and the cage (3) by a second part, said two parts being fixed to each other by spot welds (11).

10. A method of manufacturing a thermostatic valve actuated by an expansible wax thermostatic element (6) and comprising on one side of an annular valve seat (1) a bow-shaped member (2) on which bears one of the two elements constituted respectively by the casing (4) and by the movable stem (5) of the thermostatic wax element (6) and, on the other side of the seat (1), a cage (3) serving as an abutment for a compression spring (7) which seeks to push back towards the seat (1) a valve (8) connected to the other of the aforesaid elements (4, 5), the valve in which the bow-shaped member (2), the seat (1) and the cage (3) are assembled rigidly in a metal framework of which the periphery of the seat (1) constitutes a mounting flange and in which the stainless steel cage (3) is spot welded to the valve seat (1), characterised in that not only the cage (3) but also the bow-shaped member (2) and the seat (1) are constituted by stainless steel parts, the cage (3) and/or the bow-shaped member (2) being made initially of independent parts of the valve seat (1); and in that there are made on end parts (19, 20) of the or each independent part which is or are disposed parallel with a solid cross member (16) of the valve seat (1), bosses (18) which project towards said solid part (176); and in that the parts to be assembled are aligned by disposing the compression spring (7) between them; and in that the parts are placed between two sets of welding electrodes (22, 23) adapted for movement in respect of each other; and in that in one single operation the spring (7) is compressed and the weld is made by bringing one of the two sets of electrodes (22, 23) towards the other with sufficient force to produce a compression setting of the above-mentioned bosses (18).

11. A method according to claim 10 for the manufacture of a thermostatic valve comprising a breather valve ball (13), characterised in that it comprises the following additional phases:
- there is provided on the edge of the cage (3) a seating (12) for the breather valve ball (13) while a vent hole (14) is provided in the seat (1);
- the ball (13) is placed in the seating (12), and
- the final phase of bringing the sets of electrodes (22, 23) together is carried out in such a way that the seat (1) maintains the ball (13) in its seating (12).
